(19) Europäisches Patentamt
European Patent Office
Office européen des brevets

(11) **EP 2 135 908 A2**

(12) **EUROPEAN PATENT APPLICATION**

(43) Date of publication:
**23.12.2009 Bulletin 2009/52**

(51) Int Cl.:
***C09J 7/02*** (2006.01)

(21) Application number: **09160896.8**

(22) Date of filing: **22.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.05.2008 JP 2008135517**

(71) Applicant: **NITTO DENKO CORPORATION Osaka (JP)**

(72) Inventors:
• **Niwa, Masahito Osaka (JP)**
• **Okamoto, Masayuki Osaka (JP)**
• **Higuchi, Naoaki Osaka (JP)**

(74) Representative: **Grünecker, Kinkeldey, Stockmair & Schwanhäusser Anwaltssozietät Leopoldstrasse 4 80802 München (DE)**

(54) **Pressure-sensitive adhesive composition and pressure-sensitive adhesive sheet to be attached to metal surface**

(57) The present invention relates to a pressure-sensitive adhesive composition used for a pressure-sensitive adhesive sheet to be directly attached to a metal surface, the composition including, as a base polymer, an acrylic copolymer obtained by polymerizing a monomer mixture, the monomer mixture including: at least one monomer (monomer m1) selected from alkyl (meth)acrylates represented by the formula (I): $CH_2=C(R^1)COOR^2$ in which $R^1$ is a hydrogen atom or a methyl group, and $R^2$ is an alkyl group having 1 to 20 carbon atoms, in an amount of 50 to 99.9% by weight based on a total amount of the monomer mixture, and at least one monomer (monomer m2) selected from N-hydroxyalkyl (meth)acrylamides represented by the formula (II): $CH_2=C(R^3)CONHR^4$ in which $R^3$ is a hydrogen atom or a methyl group, and $R^4$ is a hydroxyalkyl group having 2 to 4 carbon atoms, in an amount of 0.1 to 25% by weight based on the total amount of the monomer mixture; and the monomer mixture including substantially no carboxyl group-containing monomer.

*Fig. 1*

**Description**

**FIELD OF THE INVENTION**

The present invention relates to a pressure-sensitive adhesive (hereinafter also referred to "adhesive", and the same shall apply hereinafter) composition for a pressure sensitive adhesive sheet to be directly attached to a metal surface, and also relates to a pressure-sensitive adhesive sheet to be attached to a metal surface.

**BACKGROUND OF THE INVENTION**

Recently, the pressure-sensitive adhesive sheets have been employed in various aspects such as fixation (bonding), conveyance, protection, decoration, and the like of articles. Typical examples of the pressure-sensitive adhesive sheets include those provided with a pressure-sensitive adhesive layer formed by using a pressure-sensitive adhesive composition (an acrylic pressure-sensitive adhesive composition) containing an acrylic copolymer as a base polymer. As the acrylic copolymer, generally, those containing alkyl (meth)acrylate as a major ingredient (a main component) and further having a copolymerization composition containing carboxyl group-containing monomers such as acrylic acid, for the purpose of improving adhesive performance and the like are used.

However, when a pressure-sensitive adhesive sheet used for the articles having a metal surface (electronic parts and the like) has the copolymerization composition containing a carboxyl group-containing monomer as described above, the carboxyl group in the base polymer may cause the corrosion of the metal surface. Accordingly, for the pressure-sensitive adhesive composition for forming a pressure-sensitive adhesive layer provided in a pressure-sensitive adhesive sheet for this application (particularly, application for directly attaching to a metal surface), an acrylic copolymer having a copolymerization composition containing no carboxyl group-containing monomer is preferably used as a base polymer. As the background art documents regarding these kinds of the technologies, JP-A-2007-63536, JP-A-2005-325250 and JP-A-2000-303045 may be exemplified. As the background art documents regarding the acrylic pressure-sensitive adhesive, JP-A-2007-264092 may be exemplified. Also, JP-A-2003-165965 is a background art document regarding a pressure-sensitive adhesive and an adhesive.

However, the pressure-sensitive adhesive composition containing an acrylic copolymer for which the carboxyl group-containing monomer is not used as a base polymer has a tendency that the adhesive characteristics of a pressure-sensitive adhesive sheet formed by using the composition are insufficient. In this regard, JP-A-2007-63536 describes copolymerization with a specific maleimide-based compound, JP-A-2005-325250 describes copolymerization with the nitrogen atom-containing monomers such as N-acryloylmorpholine, and JP-A-2000-303045 describes use of specific monomers such as phenoxyethyl acrylate as main monomer components. However, even in the pressure-sensitive adhesive sheets formed by using these technologies, there is room for improving adhesive performance. For example, it would be useful to provide a pressure-sensitive adhesive composition that exhibits a cohesive force without the use of a carboxyl group-containing monomer, and further is capable of forming a pressure-sensitive adhesive sheet having increased repelling resistance (adhesiveness on a curved surface).

**SUMMARY OF THE INVENTION**

The present invention has been made in light of the conventional circumstances, and an object thereof is to provide an acrylic pressure-sensitive adhesive composition that is capable of forming a pressure-sensitive adhesive sheet having improved adhesive performances (particularly repelling resistance), without the substantial use of a carboxyl group-containing monomer. Another object of the present invention is to provide a pressure-sensitive adhesive sheet to be attached to a metal surface, obtained by using the pressure-sensitive adhesive composition.

Namely, the present invention relates to the following items (1) to (5).

(1) A pressure-sensitive adhesive composition used for a pressure-sensitive adhesive sheet to be directly attached to a metal surface, the composition including, as a base polymer, an acrylic copolymer obtained by polymerizing a monomer mixture,
the monomer mixture including:

at least one monomer (monomer m1) selected from alkyl (meth)acrylates represented by the following formula (I) in an amount of 50 to 99.9% by weight based on a total amount of the monomer mixture:

$$CH_2=C(R^1)COOR^2 \qquad (I)$$

in which $R^1$ is a hydrogen atom or a methyl group, and $R^2$ is an alkyl group having 1 to 20 carbon atoms, and

at least one monomer (monomer m2) selected from N-hydroxyalkyl (meth)acrylamides represented by the following formula (II) in an amount of 0.1 to 25% by weight based on the total amount of the monomer mixture:

$$CH_2=C(R^3)CONHR^4 \qquad (II)$$

in which $R^3$ is a hydrogen atom or a methyl group, and $R^4$ is a hydroxyalkyl group having 2 to 4 carbon atoms; and the monomer mixture including substantially no carboxyl group-containing monomer.

(2) The composition according to (1), in which the monomer m1 and the monomer m2 are contained in a total amount of 90% by weight or more based on the total amount of the monomer mixture.

(3) The composition according to (1) or (2), in which the acrylic copolymer has a glass transition temperature (Tg) of -10°C or lower.

(4) The composition according to any one of (1) to (3), in which the monomer m2 is N-(2-hydroxyethyl) (meth) acrylamide.

(5) A pressure-sensitive adhesive sheet to be attached to a metal surface, which is used by directly attaching to a metal surface, the sheet including a pressure-sensitive adhesive layer formed with the composition according to any one of (1) to (4).

Since this pressure-sensitive adhesive composition contains an acrylic copolymer that does not substantially include a monomer having a carboxyl group (a carboxyl group-containing monomer), as a base polymer, even when a pressure-sensitive adhesive layer formed by using the composition is directly attached to a metal surface, the corrosion of the metal surface by the carboxyl group can be prevented. In addition, by using, as a base polymer, an acrylic copolymer having a monomer composition (a proportional ratio of each of the monomers used as a monomer component, that is, a copolymerization composition) including the monomer m1 as a main component together with a predetermined amount of the monomer m2, a pressure-sensitive adhesive layer (or a pressure-sensitive adhesive sheet including the pressure-sensitive adhesive layer; this shall apply hereinafter) having a high cohesive force, and exhibiting further improved repelling resistance can be formed. Suitable examples of the monomer m2 include N-(2-hydroxyethyl) (meth)acrylamide. Among these, N-(2-hydroxyethyl)acrylamide is preferably used.

In another preferred embodiment of the pressure-sensitive adhesive composition as disclosed herein, the monomer m1 and the monomer m2 are contained in a total amount of about 90% by weight or more based on a total monomer mixture. By a pressure-sensitive adhesive composition including, as a base polymer, an acrylic copolymer obtained by the polymerization, for example, by using a thermal polymerization (a solution polymerization and the like), of the monomer mixture having the above-described composition, a pressure-sensitive adhesive layer having higher quality stability can be formed.

The glass transition temperature (Tg) of the acrylic copolymer is preferably about -10°C or lower (typically about -10 to -70°C). A pressure-sensitive adhesive composition including, as a base polymer, an acrylic copolymer having the monomer composition with Tg in the above-described range may form a pressure-sensitive adhesive layer exhibiting good adhesive performances (tackiness and the like), for example, at a normal temperature (typically around 5 to 35°C, for example, 20 to 25°C).

In a preferred embodiment of the pressure-sensitive adhesive composition as disclosed herein, the composition includes about 0.01 to 1 part by weight of an isocyanate-based crosslinking agent based on 100 parts by weight of the monomer mixture. According to the composition, a pressure-sensitive adhesive layer having an appropriate crosslinking structure can be formed, by the function of the crosslinking agent (typically a crosslinking reaction, usually occurring between a hydroxyl group derived from the monomer m2 in the acrylic copolymer and a crosslinking agent). The pressure-sensitive adhesive layer may exhibit good adhesive performances (for example, a cohesive force).

According to the present invention, a pressure-sensitive adhesive sheet to be attached to a metal surface provided with a pressure-sensitive adhesive layer formed by using any one pressure-sensitive adhesive composition as disclosed herein is provided. Further, the pressure-sensitive adhesive sheet does not corrode a metal surface even when it is directly attached to the metal surface. Further, the pressure-sensitive adhesive sheet can exhibit good adhesiveness on the metal surface, and further excellent cohesive force and repelling resistance.

## BRIEF DESCRIPTION OF THE DRAWINGS

Fig. 1 is a schematic cross-sectional view showing a configuration example of the pressure-sensitive adhesive sheet according to the present invention.

Fig. 2 is another schematic cross-sectional view showing the configuration example of the pressure-sensitive adhesive sheet according to the present invention.

Fig. 3 is a still another schematic cross-sectional view showing the configuration example of the pressure-sensitive adhesive sheet according to the present invention.

Fig. 4 is a further schematic cross-sectional view showing the configuration example of the pressure-sensitive adhesive sheet according to the present invention.

Fig. 5 is a still further schematic cross-sectional view showing the configuration example of the pressure-sensitive adhesive sheet according to the present invention.

Fig. 6 is a still more further schematic cross-sectional view showing the configuration example of the pressure-sensitive adhesive sheet according to the present invention.

Description of Reference Numerals and Signs

1: Substrate
2: Pressure-sensitive adhesive layer
3: Release liner
11, 12, 13, 14, 15, and 16: Pressure-sensitive adhesive sheets

**DETAILED DESCRIPTION OF THE INVENTION**

Hereinbelow, suitable embodiments of the present invention will be described. Further, the factors required to carry out the present invention other than the factors specifically mentioned in the present specification can be figured out by the design of a skilled person in the art on the basis of a background art in the relevant field. The present invention can be carried out in accordance with a common technological knowledge in the relevant field and the contents disclosed in the present specification.

The pressure-sensitive adhesive composition as disclosed herein contains, as a base polymer, an acrylic copolymer obtained by the polymerization (at least partially polymerization) of a predetermined monomer mixture. The monomer mixture includes at least the monomer m1 and the monomer m2 as essential components.

The monomer m1 is a component which is a main monomer (main component) constituting the monomer mixture, and includes alkyl (meth)acrylate represented by the following formula (I) that is (meth)acrylic ester of alkyl alcohol. Here, the "(meth)acrylic acid" is meant to encompass acrylic acid and methacrylic acid. Further, the expression that the monomer m1 is a main monomer means that the amount of the monomer m1 (in a case of including two or more alkyl (meth)acrylates represented by the formula (I), the total amount thereof) is 50% by weight or more based on the total amount of the monomer mixture.

The monomer m1 can be one or more selected from alkyl (meth)acrylates represented by the following formula (I).

$$CH_2=C(R^1)COOR^2 \qquad \text{(I)}$$

Here, $R^1$ in the formula (I) is a hydrogen atom or a methyl group. Further, $R^2$ in the formula (I) is an alkyl group having 1 to 20 carbon atoms. The alkyl group may be linear or branched. Specific examples of alkyl (meth)acrylate represented by the formula (I) include methyl (meth)acrylate, ethyl (meth)acrylate, n-propyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, heptyl (meth)acrylate, n-octyl (meth)acrylate, isooctyl (meth)acrylate, 2-ethylhexyl (meth)acrylate, nonyl (meth)acrylate, isononyl(meth)acrylate, decyl(meth)acrylate, isodecyl(meth)acrylate, undecyl(meth)acrylate, dodecyl (meth)acrylate, tridecyl(meth)acrylate, tetradecyl(meth)acrylate, pentadecyl(meth)acrylate, hexadecyl(meth)acrylate, heptadecyl(meth)acrylate, octadecyl(meth)acrylate, nonadecyl(meth)acrylate and eicosyl(meth)acrylate. Among these, alkyl (meth)acrylate in which $R^2$ is an alkyl group having 2 to 14 carbon atoms (the range of carbon atoms may be hereinafter referred to "$C_{2-14}$") is preferable, and alkyl (meth)acrylate in which $R^2$ is a $C_{2-10}$ alkyl group (for example, an n-butyl group, a 2-ethylhexyl group, and the like) is more preferable.

In a preferred embodiment, the alkyl (meth)acrylate in which $R^2$ in the formula (1) is a $C_{2-10}$ (more preferably $C_{4-8}$) alkyl group occupies about 70% by weight or more (more preferably about 90% by weight or more) of the total amount of the monomer m1. Substantially all of the monomer m1 may be $C_{2-10}$ alkyl (more preferably $C_{4-8}$ alkyl) (meth) acrylate. The monomer mixture may be, for example, a composition including butyl acrylate (BA) alone, a composition including 2-ethylhexyl acrylate (2EHA) alone, a composition including the two kinds thereof, that is, BA and 2EHA, and the like, as a monomer m1.

The amount of the monomer m1 can be about 50 to 99.9% by weight (preferably about 60 to 99% by weight) based on the total amount of the monomer mixture. When the amount of the monomer m1 is lower than the above-described range, the pressure-sensitive adhesive layer formed from the composition has a tendency of having insufficient adhesive performances (adhesiveness, tackiness, and the like). On the other hand, when the amount of the monomer m1 is higher than the above-described range, since the amount of the monomer m2 that can be contained in the monomer mixture is decreased, the compatibility between the cohesive force (for example, durability against peeling under a certain stress, that is a static load characteristic) and the repelling resistance tends to be worse. The amount of the monomer m1 may be about 75 to 99% by weight (for example, about 85 to 97% by weigh) based on the total amount of the monomer mixture. Further, it is usual that the composition (monomer composition) of the monomer mixture corresponds to the copolymerization ratio of an acrylic copolymer obtained by the polymerization of the monomer mixture.

The monomer mixture further includes the monomer m2, in addition to the monomer m1 as a main monomer. This monomer m2 may be one or more selected from N-hydroxyalkyl (meth)acrylamides represented by the following formula (II).

$$CH_2=C(R^3)CONHR^4 \qquad (II)$$

Here, $R^3$ in the formula (II) is a hydrogen atom or a methyl group. Further, $R^4$ in the formula (II) is a hydroxyalkyl group having 2 to 4 carbon atoms. The alkyl group in the hydroxyalkyl group may be linear or branched. Specific examples of N-hydroxyalkyl (meth)acrylamide represented by the formula (II) include N-(2-hydroxyethyl) acrylamide, N-(2-hydroxyethyl)methacrylamide, N-(2-hydroxypropyl) acrylamide, N-(2-hydroxypropyl)methacrylamide, N-(1-hydroxypropyl)acrylamide, N-(1-hydroxypropyl)methacrylamide, N-(3-hydroxypropyl)acrylamide, N-(3-hydroxypropyl)methacrylamide, N-(2-hydroxybutyl)acrylamide, N-(2-hydroxybutyl)methacrylamide, N-(3-hydroxybutyl)acrylamide, N-(3-hydroxybutyl)methacrylamide and N-(4-hydroxybutyl)acrylamide, N-(4-hydroxybutyl)methacrylamide. Examples of the monomer m2 in the present invention that is preferable from the viewpoint that a pressure-sensitive adhesive layer having good balance between hydrophilicity and hydrophobicity, and excellent balance among the adhesive properties can be formed include N-(2-hydroxyethyl)acrylamide and N-(2-hydroxyethyl)methacrylamide. Particularly, N-(2-hydroxyethyl) acrylamide (HEAA) is preferably used. For example, 50% by weight or more (more preferably 70% by weight or more, typically substantially all) of the monomer m2 is preferably HEAA.

The monomer m2 can function as a component contributing to the improved aggregation of a pressure-sensitive adhesive due to the interaction between the molecules of the monomer m2. The amount of the monomer m2 may be about 0.1 to 25% by weight (typically about 1 to 22% by weight) based on the total amount of the monomer mixture. When the amount of the monomer m2 is lower than the above-described range, the pressure-sensitive adhesive layer formed from the composition has a tendency of having insufficient adhesive performances (adhesiveness at a high temperature, durability against peeling under a certain stress, and the like). On the other hand, when the amount of the monomer m2 is higher than the above-described range, there is a tendency that tackiness or the adhesiveness at a lower temperature is lowered.

In a preferred embodiment of the pressure-sensitive adhesive composition as disclosed herein, the amount of the monomer m2 is about 2% by weight or more (typically 2 to 20% by weight), and more preferably about 3% by weight or more (typically about 3 to 15% by weight, for example about 3 to 12% by weight) based on the total amount of the monomer mixture. According to this pressure-sensitive adhesive composition, even the case where the monomer mixture has the composition in which, for example, the monomer mixture does not substantially include a monomer having a hetero atom (nitrogen, sulfur, and the like) other than oxygen, other than the monomer m2 (that is, the monomer mixture does not include a hetero atom-containing monomer other than the monomer m2, or includes 0.1% by weight or less of a hetero atom-containing monomer based on the total amount of the monomer mixture), an effect that a pressure-sensitive adhesive sheet having better cohesive force and repelling resistance can be formed can be obtained.

The weight ratio of the monomer m1 to the monomer m2 in the monomer mixture (m1/m2) can be, for example, about 99.9/0.1 to 70/30. Usually, the weight ratio thereof is preferably about 98/2 to 80/20 (more preferably about 97/3 to 90/10). According to this pressure-sensitive adhesive composition, for example, even the case where the monomer mixture has the composition in which the monomer mixture do not substantially includes a monomer having a hetero atom (nitrogen, sulfur, and the like) other than oxygen, other than the monomer m2 (that is, the monomer mixture includes substantially only the monomer m1 and the monomer m2), an effect that a pressure-sensitive adhesive sheet having better cohesive force and repelling resistance can be formed can be obtained.

The total amount of the monomer m1 and the monomer m2 can be, for example, about 70% by weight or more based on the total amount of the monomer mixture. The total amount thereof is preferably about 90% by weight or more (more preferably about 95% by weight or more) based on the total amount of the monomer mixture. In a preferred embodiment of the pressure-sensitive adhesive composition as disclosed herein, the monomer mixture includes substantially only the monomer m1 and the monomer m2 (that is, the total amounts of the monomer m 1 and the monomer m2 is substantially 100% by weight based on the total amount of the monomer mixture). According to this pressure-sensitive adhesive composition, an effect that a pressure-sensitive adhesive sheet having better cohesive force and repelling resistance can be formed by the simple composition can be obtained.

As for the technology as disclosed herein, the monomer mixture does not substantially include a carboxyl group-containing monomer. Here, the "carboxyl group-containing monomer" refers to a vinyl monomer (an ethylenically unsaturated monomer) having at least one carboxyl group within one molecule thereof (which may be in the form of an anhydride). Specific examples of the carboxyl group-containing monomer include ethylenically unsaturated monocarboxylic acids such as (meth)acrylic acid, crotonic acid; ethylenically unsaturated dicarboxylic acids such as maleic acid, itaconic acid, citraconic acid; anhydrides of ethylenically unsaturated dicarboxylic acids such as anhydrous maleic acid, anhydrous itaconic acid. Further, the expression that the monomer mixture "does not substantially include" a carboxyl group-containing monomer means that the monomer mixture does not include any carboxyl group-containing monomer, or the content thereof is 0.1% by weight or less based on the total amount of the monomer mixture.

It is preferable that the monomer mixture does not substantially include a carboxyl group-containing monomer, as well as that the monomer mixture does not substantially include an acidic group-containing monomer (a sulfonic acid group, a phosphoric acid group, and the like) other than the carboxyl group. That is, it is preferable that the monomer mixture does not include an acidic group-containing monomer in addition to the carboxyl group-containing monomer (which means the monomer encompasses a carboxyl group-containing monomer and another acidic group-containing monomer), or that the total amount thereof is 0.1 % by weight or less based on the total amount of the monomer mixture. This pressure-sensitive adhesive composition can form a pressure-sensitive adhesive layer which the corrosion of metal surface is highly protected when it is attached on the metal surface (that is, the corrosiveness on a metal surface is highly inhibited).

The monomer mixture can contain other monomers (that is, the monomers other than the monomer m 1 and the monomer m2, which may be hereinafter referred to a "monomer m3") as an optional component, in addition to the monomer m1 and the monomer m2. By using the monomer m3, for example, various characteristics of the pressure-sensitive adhesive, the structure of the acrylic copolymer, or the like can be more appropriately controlled. As the monomer m3, one or more selected from various monomers that are capable of copolymerization with alkyl (meth) acrylate as used herein, and do not have a carboxyl group (typically a carboxyl group and an acidic group other than a carboxyl group) can be employed. Various monomers that have one or more ethylenically unsaturated groups, for example, a (meth)acryloyl group, a vinyl group, and the like can also be used.

For example, as the monomer m3, one or more selected from monomers including nitrogen (N) as a constituent atom (provided that a compound corresponding the monomer m2 is excluded) can be used. Examples of the nitrogen atom-containing monomer include cyclic (meth)acrylamides such as N-(meth)acryloylmorpholine and N-acryloylpyrrolidine; non-cyclic (meth)acrylamides such as (meth)acrylamide, N-substituted (meth)acrylamide (for example, N-alkyl (meth)acrylamides such as N-ethyl (meth)acrylamide, N-n-butyl (meth)acrylamide; N,N-dialkyl (meth)acrylamides such as N,N-dimethyl (meth)acrylamide, N,N-diethyl (meth)acrylamide, N,N-dipropyl (meth)acrylamide, N,N-diisopropyl (meth)acrylamide, N,N-di(n-butyl)(meth)acrylamide and N,N-di(t-butyl)(meth)acrylamide); N-vinyl cyclic amides such as N-vinyl-2-pyrrolidone, N-vinyl-2-piperidone, N-vinyl-3-morpholinone, N-vinyl-2-caprolactam, N-vinyl-1, 3-oxazine-2-one and N-vinyl-3, 5-morpholinedione; amino group-containing monomers such as aminoethyl (meth)acrylate, N,N-dimethylaminoethyl (meth)acrylate and N,N-dimethylaminopropyl (meth)acrylate; maleimide backbone-containing monomers such as N-cyclohexylmaleimide and N-phenylmaleimide; and itaconimide-based monomers such as N-methylitaconimide, N-ethylitaconimide, N-butylitaconimide, N-2-ethylhexylitaconimide, N-laurylitaconimide and N-cyclohexylitaconimide.

Other examples of the monomers that can be employed as the monomer m3 include epoxy group-containing monomers such as glycidyl (meth)acrylate and allylglycidyl ether; alkoxy group-containing monomers such as methoxyethyl (meth)acrylate, methoxypropyl (meth)acrylate, (meth)acrylic acid methoxyethyleneglycol and (meth)acrylic acid methoxypolypropyleneglycol; cyano group-containing monomers such as acrylonitrile and methacrylonitrile; styrene-based monomers such as styrene and α-methylstyrene; α-olefins such as ethylene, propylene, isoprene, butadiene and isobutylene; isocyanate group-containing monomers such as 2-metacryloyloxyetlrylisocyanate; vinyl ester-based monomers such as vinyl acetate and vinyl propionate; vinyl ether-based monomers such as vinyl ether; heterocyclic group-containing (meth)acrylic esters such as tetrahydrofurfuryl (meth)acrylate; halogen atom-containing monomers such as fluorine(meth)acrylate; alkoxysilyl group-containing monomers such as 3-methacryloxypropyltrimethoxysilane and vinyltrimethoxysilane; siloxane bond-containing monomers such as silicone (meth)acrylate; alkyl (meth)acrylate in which $R^2$ in the formula (I) is an alkyl group having 21 or more carbon atoms,; alicyclic hydrocarbon group-containing (meth) acrylates such as cyclopentyl (meth)acrylate, cyclohexyl (meth)acrylate, bornyl (meth)acrylate and isobornyl (meth) acrylate; and aromatic hydrocarbon group-containing (meth)acrylates such as phenyl (meth)acrylate, benzyl (meth) acrylate, phenoxyethyl (meth)acrylate and phenoxydiethyleneglycol (meth)acrylate.

Furthermore, as the monomer m3, for example, polyfunctional monomers such as ethyleneglycol di(meth) acrylate, diethyleneglycol di(meth)acrylate, triethyleneglycol di(meth)acrylate, tetraethylcneglycol di(meth)acrylate, polyethyleneglycol di(meth)acrylate, polypropyleneglycol di(meth)acrylate, neopentylglycol di(meth)acrylate, hexanediol di(meth)acrylate, pentaerythritol di(meth)acrylate, trimethylolpropane tri(meth)acrylate, pentaerythritol tri(meth)acrylate, dipentaerythritol hexa(meth)acrylate, epoxyacrylate, polyesteracrylate, urethaneacrylate, divinylbenzene, butyl di(meth) acrylate, hexyl di(meth)acrylate may be used.

Further examples of the monomer m3 include hydroxyl group-containing monomers, such as hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl(meth)acrylate, 12-hydroxylauryl(meth)acrylate and [4-(hydroxymethyl)cyclohexyl]methyl acrylate; N-hydroxyalkyl (meth)acrylamides in which $R^4$ in the formula (II) is a hydroxyalkyl group having 1 or 5 or more carbon atoms; and alkenyl alcohols such as vinyl alcohol and allyl alcohol.

Moreover, in case where a hydroxyl group-containing monomer is used as the monomer m3, it is preferable to use a lower proportion of the hydroxyl group-containing monomer m3 than that of the monomer m2, from the viewpoint that the effect from the use of the monomer m2 can be more appropriately exhibited. In other words, it is preferable that the monomer m2 constitutes more than 50% by weight of the proportion (typically 60% by weight or more, more preferably 75% by weight or more, for example 90% by weight or more of the proportion) based on the total amount of the hydroxyl group-containing monomers contained in the monomer mixture. Alternatively, the hydroxyl group-containing monomer contained in the monomer mixture may be substantially only the monomer m2.

The amount of the monomer m3 (if two or more kinds thereof are contained, the total amount thereof) is appropriately about 30% by weight or less based on the total amount of the monomer mixture. When the amount of the monomer m3 is too high, a pressure-sensitive adhesive sheet formed by using the composition may have deteriorated balance among the adhesive performances. In a preferred embodiment, the amount (by weight) of the monomer m3 in the monomer mixture is less than the amount of the monomer m2 (more preferably no more than a half of the amount of the monomer m2, more preferably no more than a quarter of the amount of the monomer m2). The amount of the monomer m3 is preferably about 10% by weight or less based on the total amount of the monomer mixture, and more preferably about 5% by weight or less (for example, about 2% by weight or less). Alternatively, the monomer mixture may not substantially include a monomer m3 (that is, the monomer mixture may include substantially only the monomer m1 and the monomer m2).

The monomer mixture for the technology as disclosed herein preferably contain the monomers at the proportions, respectively, at which Tg of the acrylic copolymer obtained by polymerization of the monomer mixture is about -10°C or lower (typically about -10°C to -70°C), and more preferably contain the monomers at the proportions, respectively, at which Tg of the acrylic copolymer obtained by polymerization of the monomer mixture is about -20°C or lower (typically about -20°C to -70°C). The composition of the monomer mixture may be adjusted such that the Tg is in the above-described range. Here, the Tg of acrylic copolymer refers to a value as determined from a Fox equation, on the basis of the Tg of the homopolymer of the monomers constituting the monomer mixture, and the weight fraction of the monomers (copolymerization composition). The value of the Tg of the homopolymer can be obtained from various known materials ("Handbook of Adhesion Technologies" of NIKKAN KOGYO SHIMBUN, LTD., and the like).

In the technology as disclosed herein, the polymerization method for obtaining an acrylic copolymer (a pressure-sensitive adhesive copolymerized product) as a base polymer from the monomer mixture having the above-described composition is not particularly limited, but any method selected from various conventionally known polymerization methods can be appropriately employed. For example, any method selected from a polymerization method carried out using a thermal polymerization initiator (thermal polymerization methods such as a solution polymerization method, an emulsion polymerization method, a block polymerization method, and the like); a polymerization method carried out by irradiation of active energy rays such as light, radioactive ray, and the like (which may be hereinafter referred to a high energy ray); and the like can be employed.

Among these polymerization methods, from the viewpoint of workability, quality stability, and the like, for example, a solution polymerization method can be preferably employed. The embodiment of the solution polymerization is not particularly limited, and can be carried out by appropriately employing, for example, various known monomer supplying methods, polymerization conditions (a polymerization temperature, a polymerization time, a polymerization pressure, and the like), the materials to be used (a polymerization initiator, surfactant, and the like), by conventionally known common solution polymerization, and the same embodiment. As the monomer supplying method, any method for supplying a whole amount of the monomer mixture at once to a reaction vessel, a continuous supplying (dropping) method, a divided supplying (dropping) method, or the like can be employed. In a preferred embodiment, an embodiment in which a solution obtained by dissolving a whole amount of the monomer mixture and an initiator in a solvent is prepared in a reaction vessel, and then the monomer mixture is polymerized batchwise (batch polymerization) is exemplified. This batch polymerization is preferred, since it is easy to carry out the polymerization process and the process control. In another preferred embodiment, an embodiment in which an initiator (typically a solution obtained by dissolving an initiator in a solvent) is prepared in a reaction vessel, and then monomer mixture is polymerized while dropping the solution dissolved in the solvent onto the reaction vessel (dropping polymerization or continuous polymerization) is exemplified. A part (partial kind and/or partial proportion) of the monomer mixture is typically put into the reaction vessel with the solvent, and then the residual monomer mixture may be dropped onto the reaction vessel. In a case of the polymerization of the monomer mixture including 15% by weight or more of the monomer m2, dropping polymerization is preferably used since it is easy to uniformly proceed the polymerization reaction.

Examples of the thermal polymerization initiator include azo-based compounds (azo-based initiators) such as 2,2'-azobisbutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane)dihydrochloride, 2,2'-azobis[2-(5-methyl-2-imidazolin-2-yl)propane]dihydrochloride, 2,2'-azobis(2-methylpropionamidine)disulfate, 2,2'-azobis(N,N'-dimethyleneisobutylamidine)dihydrachloride and 2,2'-azobis[N-(2-carboxyethyl)-2-methylpropionamidine]hydrate; persulfates such as potassium persulfate and ammonium persulfate; peroxides (peroxide-based initiators) such as dibenzoyl peroxide, tert-butyl permaleate, t-butyl hydroxyperoxide and hydrogen peroxide; substituted ethane-based initiators such as phenyl-substituted ethane; and redox system initiators such as a combination of a persulfate and sodium hydrogen sulfite, a combination of a peroxide and sodium ascorbate. In a case of the polymerization of the monomer mixture by the thermal polymerization method, a polymerization temperature selected from, for example, around 20 to 100°C (typically 40 to 80°C) can be appropriately employed.

The polymerization method carried out by irradiation of light (typically ultraviolet ray) is typically carried out by using a photopolymerization initiator. The photopolymerization initiator is not particularly limited, and for example, a ketal-based photopolymerization initiator, an acetophenone-based photopolymerization initiator, a benzoin ether-based photopolymerization initiator, an acylphosphine oxide-based photopolymerization initiator, an $\alpha$-ketol-based photopolymerization initiator, an aromatic sulfonylchloride-based photopolymerization initiator, a photoactive oxime-based photopolymerization initiator, a benzoin-based photopolymerization initiator, a benzyl-based photopolymerization initiator, a benzophenone-based photopolymerization initiator, a thioxanthone-based photopolymerization initiator, or the like can be used. These photopolymerization initiators may be used alone or in combination thereof.

Specific examples of the ketal-based photopolymerization initiator include 2,2-dimethoxy-1,2-diphenyl ethane-1-one (for example, trade name "Irgacure 651 "(manufactured by Ciba Specialty Chemicals)). Specific examples of the acetophenone-based photopolymerization initiator include 1-hydroxycyclohexylphenylketone (for example, trade name "Irgacure 184" (manufactured by Ciba Specialty Chemicals)), 2,2-diethoxyacetophenone, 2,2-dimethoxy-2-phenylacetophenone, 4-phenoxydichloroacetophenone and 4-(t-butyl)dichloroacetophenone. Specific examples of the benzoinether-based photopolymerization initiator include benzoinmethylether, benzoinethylether, benzoinpropylether, benzoinisopropylether and benzoinisobutylether. As the acylphosphineoxide-based photopolymerization initiator, a trade name "Lucirin TPO" (manufactured by BASF), or the like can be used. Specific examples of the $\alpha$-ketol-based photopolymerization initiator include 2-methyl-2-hydroxypropiophenone and 1-[4-(2-hydroxyethyl)phenyl]-2-methylpropane-1-one. Specific examples of the aromatic sulfonyl chloride-based photopolymerization initiator include 2-naphthalenesulfonylchloride. Specific examples of the photoactive oxime-based photopolymerization initiator include 1-phenyl-1,1-propanedione-2-(o-ethoxycarbonyl)-oxime. Specific examples of the benzoin-based photopolymerization initiator include benzoin. Specific examples of the benzyl-based photopolymerization initiator include benzil. Specific examples of the benzophenone-based photopolymerization initiator include benzophenone, benzoyl benzoic acid, 3,3'-dimethyl-4-methoxybenzophenone, polyvinylbenzophenone and $\alpha$-hydroxycyclohexylphenylketone. Specific examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone and dodecylthioxanthone.

The amount of the polymerization initiator to be used is not particularly limited. For example, the amount of the polymerization initiator to be used may be about 0.01 to 2 parts by weight (preferably about 0.01 to 1 part by weight) based on 100 parts by weight of the total amount of the monomer mixture.

The pressure-sensitive adhesive composition as disclosed herein can be a composition that further contains a crosslinking agent, in addition to the acrylic copolymer obtained by the polymerization of the monomer mixture. As the crosslinking agent, any conventionally known one in the pressure-sensitive adhesive field can be appropriately selected, and for example, an isocyanate-based compound (an isocyanate-based crosslinking agent), an epoxy-based crosslinking agent, an aziridine-based crosslinking agent, a melamine-based crosslinking agent, a metal chelate-based crosslinking agent, a metal salt-based crosslinking agent, a peroxide-based crosslinking agent, an oxazoline-based crosslinking agent, an urea-based crosslinking agent, an amino-based crosslinking agent, a carbodiimide-based crosslinking agent, a coupling agent-based crosslinking agent (for example, a silane coupling agent), or the like can be used. These crosslinking agents can be used alone or in combination thereof. By crosslinking (curing) the acrylic copolymer using the crosslinking agent, the pressure-sensitive adhesive layer can be provided with suitable cohesive force and adhesive force, as well as the increased repelling resistance of the pressure-sensitive adhesive layer.

In the present invention, among these, an isocyanate-based crosslinking agent can be particularly preferably used. In a preferred embodiment, as the crosslinking agent, only one or more (typically one) isocyanate-based crosslinking agent can be used. Alternatively, within the range not remarkably interfering with the effect of the present invention, a combination of an isocyanate-based crosslinking agent and another crosslinking agent may be used.

Examples of the isocyanate-based compound include aliphatic polyisocyanates such as 1,6-hexamethylene diisocyanate, 1,4-tetramethylene diisocyanate, 2-methyl-1,5-pentane diisocyanate, 3-methyl-1,5-pentane diisocyanate and lysine diisocyanate; alicyclic polyisocyanates such as isophorone diisocyanate, cyclohexyl diisocyanate, hydrogenated tolylene diisocyanate, hydrogenated xylene diisocyanate, hydrogenated diphenylmethane diisocyanate and hydrogenated tetramethylxylene diisocyanate; aromatic polyisocyanates such as 2,4-tolylene diisocyanate, 2,6-tolylene diisocyanate, 4,4'-diphenylmethane diisocyanate, 2,4'-diphenylmethane diisocyanate, 4,4'-diphenylether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate and 3,3'-dimethoxydiphenyl-4,4'-diisocyanate; and aromatic, aliphatic polyisocyanates such as xylene-1,4-diisocyanate and xylene-1,3-diisocyanate.

Further, as the isocyanate-based crosslinking agent, a dimer or trimer, a reaction product, or a polymerized product of the above-exemplified isocyanate-based compound (for example, a dimer or trimer of diphenylmethane diisocyanate, a reaction product of trimethylolpropane and tolylene diisocyanate, a reaction product of trimethylolpropane and hexamethylene diisocyanate, polymethylenepolyphenylisocyanate, polyetherpolyisocyanate, polyesterpolyisocyanate), or the like can be used. For example, a reaction product of trimethylolpropane and tolylene diisocyanate can be preferably used.

The amount of the isocyanate-based crosslinking agent to be used can be, for example, about 0.01 to 20 parts by weight (preferably about 0.01 to 15 parts by weight), based on 100 parts by weight of the monomer mixture (in a case of the conversion of the monomer mixture in the pressure-sensitive adhesive composition is about 100%, it usually corresponds to 100 parts by weight of an acrylic copolymer). When the amount of the crosslinking agent to be used is too low, it is hard to exhibit a sufficient effect (an effect of improving the adhesive performance), and when the amount thereof is too high, it is easy to spoil the balance among the adhesion characteristics. Usually, it is suitable to use about 0.01 to 1 part by weight (preferably about 0.02 to 1 part by weight, for example, about 0.05 to 0.5 parts by weight) of the isocyanate-based crosslinking agent, based on 100 parts by weight of the monomer mixture.

The gel fraction of the pressure-sensitive adhesive layer provided on the pressure-sensitive adhesive sheet as disclosed herein, preferably, the pressure-sensitive adhesive constituting the pressure-sensitive adhesive layer is, for example, about 25 to 75%. In order to form a pressure-sensitive adhesive having the gel fraction (a pressure-sensitive adhesive after crosslinking, in case where the composition includes a crosslinking agent), the conditions such as the monomer composition (for example, the amount of the monomer m2 to be used), the molecular weight of the acrylic copolymer, the condition for forming the pressure-sensitive adhesive layer, the kind and the amount of the crosslinking agent to be used, and the like may be appropriately set. When the gel fraction of the pressure-sensitive adhesive is too low, there is a tendency of insufficient cohesive force or repelling resistance. On the other hand, when the gel fraction is too high, the adhesive force or the tackiness may be easily reduced. By the pressure-sensitive adhesive having a gel fraction in a range of about 25 to 75% (for example, about 30 to 60%), better adhesive performances can be realized.

As used herein, "the gel fraction of the pressure-sensitive adhesive" refers to a value as measured in the following method.

Method for Measuring Gel Fraction

A pressure-sensitive adhesive sample (weight: $W_{b1}$) was enclosed with a porous polytetrafluoroethylene film (weight: $W_{b2}$) having an average pore diameter of 0.2 $\mu$m in a bag shape, and the opening part thereof is tied with a kite string (weight: $W_{b3}$).
This bag is immersed in 50 mL of ethyl acetate, and left to stand at room temperature (typically 23°C) for 7 days. Then, the bag is taken out, and ethyl acetate remaining on the outer surface of the bag is wiped out. The bag is dried at 130°C for 2 hours, and the weight of the bag ($W_{b4}$) is measured. The gel fraction of the pressure-sensitive adhesive is determined by applying each value to the following equation:

$$\text{Gel Fraction [\%]} = [(W_{b4} - W_{b2} - W_{b3})/W_{b1}] \times 100$$

Further, it is desirable to use a trade name "NITOFLON (registered trademark) NTF1122" (average pore diameter: 0.2 $\mu$m, porosity: 75%, and thickness: 85 $\mu$m), or an equivalent one thereof, available from Nitto Denko Corporation, as the porous polytetrafluoroethylene (PTFE).

The pressure-sensitive adhesive composition as disclosed herein may contain, as an optional component, various additives that are common in the field of the pressure-sensitive adhesive compositions, in addition to the above-described acrylic copolymers and the crosslinking agents that are used according to the necessity. Examples of this optional component include a tackifier (a rosin-based resin, a petroleum resin, a terpene-based resin, a phenol-based resin, a ketone-based resin, and the like), a plasticizer, a softener, a filler, a colorant (a pigment, a dye, and the like), an antioxidant, a labeling agent, a stabilizer, a preservative. These additives can be used by a usual method, employing ones conventionally known, and do not particularly characterized the present invention. Therefore, the detailed description thereon is omitted here.

Furthermore, the pressure-sensitive adhesive composition as disclosed herein may be appropriately blended with a polymer other than the above-described acrylic copolymer, for the purpose of adjusting the viscosity (typically of thickening). As the polymer for adjusting the viscosity, styrene butadiene rubber (SBR), isoprene rubber (IR), a styrene butadiene-styrene block copolymer (SBS), an ethylene-acetic acid vinyl copolymer, an acryl rubber, polyurethane, polyester, and the like can be used. In addition, an acrylic polymer obtained by copolymerizing alkyl (meth)acrylate with a functional monomer (for example, one or more selected from the acrylic monomers having functional groups such as acrylamide, acrylonitrile, acryloylmorpholine, acrylic acid, and the like) may be used as the polymer for adjusting the viscosity. It is preferable to employ a polymer for adjusting the viscosity, which does not substantially contain a carboxyl group (more preferably a carboxyl group and an acidic group other than the carboxyl group).

These polymers for adjusting the viscosity may be used alone or in combination of thereof, but they are preferably used in an amount of about 40% by weight or less (typically about from 5 to 40% by weight) based on the entire pressure-sensitive adhesive formed with the pressure-sensitive adhesive composition. That is to say, it is preferable that the proportion of the polymer for adjusting the viscosity is about 40% by weight or less (more preferably about 20% by weight or less) of the pressure-sensitive adhesive forming components contained in the composition.

The pressure-sensitive adhesive composition as disclosed herein is preferably configured such that about 50% by weight or more (more preferably about 70% by weight or more, for example 90% by weight or more) of the acrylic copolymer obtained by polymerization of the monomer mixture is contained in a pressure-sensitive adhesive formed with the composition. This pressure-sensitive adhesive composition may form a pressure-sensitive adhesive with better adhesive performance.

The pressure-sensitive adhesive sheet to be attached to a metal surface according to the present invention includes a pressure-sensitive adhesive layer formed with any one pressure-sensitive adhesive composition as disclosed herein. It may be a pressure-sensitive adhesive sheet attached to the substrate, in which such the pressure-sensitive adhesive layer is provided as affixed one surface or both surfaces of a sheet-like substrate (support) (without an intention for separating the pressure-sensitive adhesive layer from the substrate), or a pressure-sensitive adhesive sheet without a substrate, in which the pressure-sensitive adhesive layer is provided on a support having releasability, for example, a release liner (a release paper, a resin sheet having a surface subjected to release treatment, and the like). As for the concept of the pressure-sensitive adhesive sheet as referred to herein, those referred to a pressure-sensitive adhesive tape, a pressure-sensitive adhesive label, a pressure-sensitive adhesive film, and the like are encompassed. In addition, the pressure-sensitive adhesive layer is not limited to ones that are continuously formed, but it may be pressure-sensitive adhesive layers formed for example, in the regular patterns such as a point form, a stripe form, and the like, or in the random patterns.

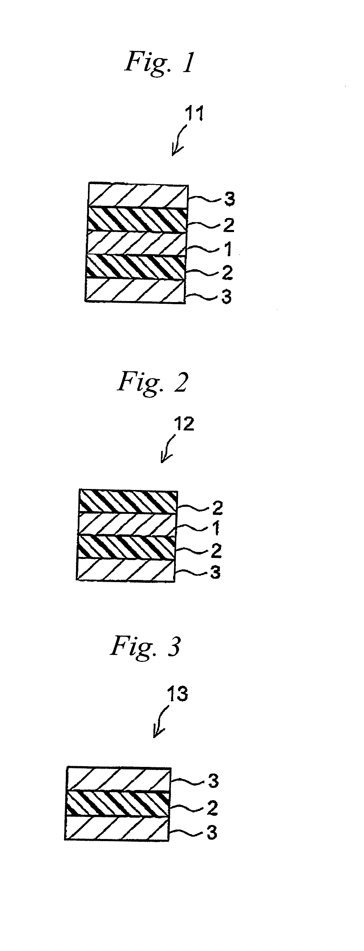

The pressure-sensitive adhesive sheet as disclosed herein may be, for example, one having a cross-section structure as schematically shown in Figs. 1 to 6. Among these, Fig. 1 and Fig. 2 are examples of configurations of a double-sided pressure-sensitive adhesive type of a pressure-sensitive adhesive sheet attached on a substrate. The pressure-sensitive adhesive sheet 11 as shown in Fig. 1 is provided with the pressure-sensitive adhesive layers 2 on the both sides of the substrate 1, and the pressure-sensitive adhesive layers 2 are each configured such that they are protected with a release liner 3 having both sides of the pressure-sensitive adhesive layer with a release surface. The pressure-sensitive adhesive sheet 12 as shown in Fig. 2 is configured such that the both sides of the substrate 1 are provided with the pressure-sensitive adhesive layers 2, and at least one of these pressure-sensitive adhesive layers is protected with a release liner 3 having at least the side of the pressure-sensitive adhesive layer with a release surface. This kind of the pressure-sensitive adhesive sheet 12 can be configured such that the pressure-sensitive adhesive layer on the other side is contacted with the back side of the release liner 3 when the pressure-sensitive adhesive sheet 12 is wound, and the pressure-sensitive adhesive layer on the other side is also protected with the release liner 3.

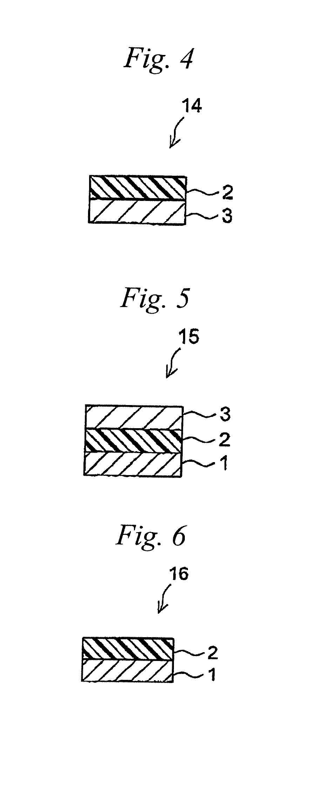

Fig. 3 and Fig. 4 are examples of the configurations of the pressure-sensitive adhesive sheet without a substrate. The pressure-sensitive adhesive sheet 13 as shown in Fig. 3 is configured such that the both sides of the pressure-sensitive adhesive layer 2 without a substrate are protected with a release liner 3 having at least the side of the pressure-sensitive adhesive layer with a release surface. The pressure-sensitive adhesive sheet 14 as shown in Fig. 4 can be configured such that one side of the pressure-sensitive adhesive layer 2 without a substrate is protected with a release liner 3 having the both sides with a release surface, and when this sheet is wound, the other side of the pressure-sensitive adhesive layer 2 is contacted with the release liner 3, and the other side is also protected with the release liner 3.

Fig. 5 and Fig. 6 are examples of the configurations of a one-sided pressure-sensitive adhesive type of a pressure-sensitive adhesive sheet attached on a substrate. The pressure-sensitive adhesive sheet 15 as shown in Fig. 5 is configured such that one side of the substrate 1 is provided with the pressure-sensitive adhesive layer 2, and the surface (adhered surface) of the pressure-sensitive adhesive layer 2 is protected with the release liner 3 having at least the side of the pressure-sensitive adhesive layer with a release surface. The pressure-sensitive adhesive sheet 16 as shown in Fig. 6 is configured such that one side of the substrate 1 is provided with the pressure-sensitive adhesive layer 2. It can be configured such that the other side of the substrate 1 has a release surface, and when the pressure-sensitive adhesive sheet 16 is wound, the pressure-sensitive adhesive layer 2 is contacted with the other side, and the surface (adhered surface) of the pressure-sensitive adhesive layer is protected on the other side of the substrate 1.

As the substrates constituting the pressure-sensitive adhesive sheet, any one can be appropriately selected, for example, from plastic films such as a polypropylene film, an ethylene-propylene copolymer film, a polyester film, a polyvinyl chloride film, and the like; foam substrates such as a polyurethane foam, a polyethylene foam, and the like; papers such as a craft paper, a crepe paper, a Japanese paper, and the like; cloth such as cotton, stable fibers, and the like; non-woven fabrics such as a polyester non-woven fabric, a vinylon non-woven fabric, and the like; metal foils such as an aluminum foil, a copper foil, and the like; etc., according to the applications of the pressure-sensitive adhesive sheet. As the plastic film, either a non-stretched film, or a stretched (monoaxially stretched or biaxially stretched) film can be used. Further, the side provided with a pressure-sensitive adhesive layer in the substrate may be surface treated with a primer application, corona discharge treatment, and the like. The thickness of the substrate can be appropriately selected according to the purposes, but generally, it is about 10 to 500 $\mu$m (typically 10 to 200 $\mu$m).

The pressure-sensitive adhesive layer can be formed, for example, by placing (typically applying) any one of the pressure-sensitive adhesive compositions as disclosed herein on a support (a substrate or a release liner), and drying the composition. This method for forming the pressure-sensitive adhesive layer can be preferably applied for a pressure-sensitive adhesive composition in the form where an acrylic copolymer obtained by at least partially (preferably, substantially completely) polymerizing the monomer mixture in advance in an appropriate polymerization method (typically a thermal polymerization method), and if necessary, a crosslinking agent, an additive, or the like are dissolved or dispersed in a liquid medium (an organic solvent, water, and the like). In a case of a pressure-sensitive adhesive composition including the crosslinking agent, in addition to the drying, an appropriate crosslinking treatment may be carried out, if necessary.

The pressure-sensitive adhesive layer can be also formed by placing (typically applying) any one of the pressure-sensitive adhesive compositions as disclosed herein on a support (a substrate or a release liner), and irradiating and curing the composition with an active energy ray (for example, an ultraviolet ray). This method for forming the pressure-sensitive adhesive layer can be preferably applied for an energy ray-curable pressure-sensitive adhesive composition in the form where the monomer mixture is partially polymerized in advance in an appropriate polymerization method (typically a photopolymerization method), and the partial polymerized product is blended with a photopolymerization initiator, and a crosslinking agent (polyfunctional (meth)acrylate, and the like) used, if necessary. This active energy ray-curable pressure-sensitive adhesive composition can have such the composition that it does not substantially a liquid medium. In a case where the composition includes the liquid medium, it is preferable that the composition placed on the support is dried, and then irradiated with an active energy ray.

The application of the pressure-sensitive adhesive composition can be carried out using a common coater such as, for example, a gravure roll coater, a reverse roll coater, a kiss-roll coater, a dip roll coater, a bar coater, a knife coater, a spray coater, and the like. From a viewpoint of promoting a crosslinking reaction, improving the preparation efficiency, and the like, the pressure-sensitive adhesive composition can be preferably dried under heating. The temperature for drying varies depending on the kinds of the support on which the composition is applied, but a temperature for drying, for example, in a range of about 40 to 150°C can be employed. Further, in a case of a pressure-sensitive adhesive sheet attached on a substrate, the pressure-sensitive adhesive composition may be directly placed on a substrate to form a pressure-sensitive adhesive layer, and the pressure-sensitive adhesive layer formed on a release liner may be transferred on a substrate.

The thickness of the pressure-sensitive adhesive layer is not particularly limited, but is usually, for example, about 10 $\mu$m or more (preferably about 20 $\mu$m or more, more preferably about 30 $\mu$m or more), whereby good adhesive performances (for example, adhesive strength) can be realized. Further, usually, it is preferable that the thickness is about 400 $\mu$m or less (typically about 200 $\mu$m or less, for example, about 100 $\mu$m or less).

Examples

Hereinbelow, several Examples of the present invention are described, but it is not construed the present invention is intended to be limited to these Examples.

Further, in the following description, "parts" and "%" are based on the weight unless otherwise specifically stated.

Example 1

To a reaction vessel equipped with a cooling tube, a nitrogen gas inlet tube, a thermometer, a dropping funnel, and a stirrer were put 0.1 part of 2,2'-azobisisobutylonitrile (AIBN) as a polymerization initiator, 98 parts of 2-ethylhexyl acrylate (2EHA, Tg of a homopolymer: -70°C) and 2 parts of N-hydroxyethyl acrylamide(HEAA, Tg of a homopolymer: 98°C) as the monomer components, and ethyl acetate as a solvent, followed by stirring at room temperature under a nitrogen gas atmosphere for 1 hour. Thereafter, the contents in the reaction vessel (a solution containing the entire amount of the monomer mixture) were heated to 60°C, polymerized in a nitrogen gas stream for 5.5 hours, and then maintained at 70°C for 2 hours. By this batch feed type of solution polymerization, a solution of the acrylic polymer was obtained.

For the obtained acrylic polymer solution was added a reaction product of trimethylolpropane and tolylene diisocyanate (manufactured by NIPPON POLYURETHANE INDUSTRY CO., LTD., trade name "CORONATE L", which may be hereinafter referred to as a "crosslinking agent A") was used in an amount of 0.3 part based on 100 parts of the acrylic polymer (in terms of solids content, and the same shall apply hereinbelow) as an isocyanate-based crosslinking agent. As such, an adhesive composition according to Example 1 was prepared.

Two sheets of the release liners (thickness: 38 $\mu$m) that had been release-treated by a silicone-based releasing agent were prepared on the surface of a polyethylene terephthalate (PET) film. The above-described pressure-sensitive adhesive composition was applied onto the release surface (the surface that had been treated with the releasing agent) of the first release liner with an applicator, dried at 130°C for 3 minutes to form a pressure-sensitive adhesive layer having a thickness of 50 $\mu$m on the release liner. Then, the pressure-sensitive adhesive layer was stuck with the release surface of the second release liner. As such, a pressure-sensitive adhesive sheet (release liner-attached pressure-sensitive adhesive sheet) configured such that the both sides of the pressure-sensitive adhesive layer were protected with the release liners was prepared.

The gel fraction of the pressure-sensitive adhesive constituting the pressure-sensitive adhesive layer of the pressure-sensitive adhesive sheet according to the Example was measured in accordance with the method for measuring a gel fraction in the following manner. That is, a porous PTFE film having a size of 100 mm × 100 mm (a trade name "NITOFLON (registered trademark) NTF1122", manufactured by Nitto Denko Corporation) and a kite string having a length of about 100 mm (thickness: 1.5 mm) were prepared, and the weight thereof were measured. Both the release liners were peeled from a cut size of 20 cm$^2$ of the release liner-attached pressure-sensitive adhesive sheet, and the pressure-sensitive adhesive sample was enclosed with the PTFE film in a bag shape, and the opening part thereof was tied with a kite string. The weight of the bag was measured, and the weight of the PTFE film ($W_{b2}$) and the weight of the kite string ($W_{b3}$) were subtracted from the weight of the bag to determine the weight of the pressure-sensitive adhesive sample ($W_{b1}$). Then, the bag was immersed in 50 mL of ethyl acetate, and left to stand at room temperature (typically 23°C) for 7 days. Thereafter, the bag was taken out of ethyl acetate, and ethyl acetate remaining on the outer surface af the bag was wiped out. The bag was dried in a drier at 130°C for 2 hours, and then the weight of the bag ($W_{b4}$) was measured. The gel fraction of the pressure-sensitive adhesive as determined by applying each value to the equation as described earlier was 68.4%.

Example 2

A pressure-sensitive adhesive composition was prepared in the same manner as in Example 1, except that the monomer mixture of the composition shown in Table 1 were used and that the amount of the crosslinking agent A to be used was 0.1 part, and a pressure-sensitive adhesive sheet was prepared using the composition. The gel fraction of the pressure-sensitive adhesive as measured in the same manner as in Example 1 was 60%.

Example 3

A pressure-sensitive adhesive composition was prepared in the same manner as in Example 1, except that the monomer mixture of the composition shown in Table 1 were used and that the amount of the crosslinking agent A to be used was 0.1 part, and a pressure-sensitive adhesive sheet was prepared using the composition. The gel fraction of the pressure-sensitive adhesive was 61.5%.

Example 4

A pressure-sensitive adhesive composition was prepared in the same manner as in Example 1, except that the monomer mixture of the composition shown in Table 1 (in the table, "HEA" represents hydroxyethyl acrylate. The Tg of the homopolymer is - 15°C.) were used, and a pressure-sensitive adhesive sheet was prepared using the composition. The gel fraction of the pressure-sensitive adhesive was 63.9%.

Example 5

A pressure-sensitive adhesive composition was prepared in the same manner as in Example 1, except that the monomer mixture of the composition shown in Table 1 were used, and a pressure-sensitive adhesive sheet was prepared using the composition. The gel fraction of the pressure-sensitive adhesive was 72%.

For the pressure-sensitive adhesive sheet prepared in Examples 1 to 5, the following evaluation tests were carried out.

**EP 2 135 908 A2**

Corrosiveness

One side of the release liner was peeled from the pressure-sensitive adhesive sheet according to each of Examples to expose one side of the pressure-sensitive adhesive layer, and a transparent PET film having a thickness of 25 μm (which had not been release-treated) was attached thereon. In addition, the release liner on the other side was peeled to expose the other side of the pressure-sensitive adhesive layer, and this was stuck with a copper foil having a thickness of 80 μm, and then maintained at an atmosphere of 60°C × 95% RH for 250 hours. Thereafter, the surface of the copper foil at a portion stuck with the pressure-sensitive adhesive sheet was observed with naked eyes on the side of the PET film, the presence or absence of the corrosion of the surface of the copper foil was confirmed using the color change in the surface of the copper foil as an index. As a result, a case where the color change in the surface of the copper foil was not confirmed was denoted as "absence" of the corrosiveness, whereas a case where the color change in the surface of the copper foil was confirmed was denoted as "presence" of the corrosiveness.

Adhesive Force

One side of the release liner was peeled from the pressure-sensitive adhesive sheet according to each of Examples to expose one side of the pressure-sensitive adhesive layer, and a PET film having a thickness of 50 μm (which had not been release-treated) was attached and supported thereon. This supported pressure-sensitive adhesive sheet was cut into a width of 25 mm to prepare a test piece. As an object to be adhered, an acrylic plate obtained by reciprocatingly rubbing and washing a clean waste to which isopropyl alcohol had been immersed 10 times was used. The release liner on the other side was peeled from the test piece, and was pressed onto the object to be adhered in such a manner that a 5 kg roller was rolled once. After storing it at 40°C for 2 days, it was taken out under a measurement environment of 23°C × 50% RH, left to stand for 30 minutes, and a peeling strength (N/25 mm) was measured using a tension tester under the condition of a tension rate of 300 mm/min., and a peeling angle of 180°.

Repelling resistance

The pressure-sensitive adhesive sheet according to each of Examples was cut into a size of a width of 10 mm and a length of 90 mm, and the release liner was peeled from one side. Then, an aluminum plate having the same size (thickness: 0.5 mm) was attached and combined therewith to prepare a test piece. This test piece was bent along a cord of φ50 mm in the longitudinal direction with the side of an aluminum plate inside (that is, a curvature of R50). Then, the release liner was peeled from the other side of the test piece, and compressed such that no floating occurred using a laminator on the surface of a polypropylene plate that had been washed in the same manner as described above. This was left to stand in an environment of 23°C for 4 hours, and then the floating height (mm) of an edge of the test piece in the longitudinal direction over the surface of the polypropylene plate was measured. The measurement was carried out on the both ends of the test piece, and the total value of the floating heights for the both ends was taken as a value of repelling resistance.

Holding Power

As an index of the cohesive force, the holding power (static load characteristics) of the pressure-sensitive adhesive sheet according to each of Examples was evaluated in the following manner. That is, the release liner on one side was peeled from the pressure-sensitive adhesive sheet to expose one side of the pressure-sensitive adhesive layer, and a PET film having a thickness of 50 μm (which had not been release-treated) was attached and supported thereon. This supported pressure-sensitive adhesive sheet was cut into a size of a width of 10 mm and a length of 50 mm to prepare a test piece. As an object to be adhered, a clean Bakelite plate washed by reciprocatingly rubbing a clean waste in which toluene had been immersed 10 times was used. The release liner on the other side was peeled from the test piece, and was pressed onto the object to be adhered in such a manner that a 2 kg roller was rolled reciprocatingly at a contact area of a width of 10 mm and a length of 20 mm. After maintaining it at 40°C for 30 minutes, the Bakelite plate was taken down under an environment of 40°C, and after giving 500 g of a load to a free end of the test piece (a protruding portion of the Bakelite plate), left to stand under an environment of 40°C for 2 hours. After giving the load and before lapse of 2 hours thereafter, a case where the test piece was dropped from the object to be adhered was denoted as "bad" holding power, whereas a case where the test piece was held in the object to be adhered even after 2 hours had passed was denoted as "good" holding power.

The results of the evaluation tests are shown in Table 1. In this table, the composition (the kinds and amount ratios of the monomers to be used) of the monomer mixture used in the pressure-sensitive adhesive composition according to each of Examples are shown together with the Tg as determined from the composition on the 5 basis of the Fox equation.

13

Table 1

| | Monomer mixture (part) | | | Tg (°C) | Corrosiveness | Repelling resistance (mm) | Peeling strength (N/ 25mm) | Holding power |
|---|---|---|---|---|---|---|---|---|
| | 2EHA | HEAA | HEA | | | | | |
| Example 1 | 98 | 2 | | -68 | Absence | 26.0 | 8.7 | Good |
| Example 2 | 96 | 4 | | -66 | Absence | 1.2 | 14.6 | Good |
| Example 3 | 98 | 10 | | -60 | Absence | 5.9 | 15.4 | Good |
| Example 4 | 98 | | 2 | -69 | Absence | 32.0 | 9.6 | Good |
| Example 5 | 100 | | 4 | -68 | Absence | 34.8 | 7.7 | Good |

As shown in Table 1, all of the pressure-sensitive adhesive sheets according to Examples 1 to 5 did not have a metal surface corrosiveness, and also exhibited sufficient holding power. Among these, from the comparison between Example 1 and Example 4, it can be found that by the copolymerization composition in which HEA (Example 4) in the monomer mixture had been replaced with the same amount of HEAA (Example 1), the repelling resistance was improved (the total value of the floating heights was decreased) while maintaining other characteristics. According to Examples 2 and 3 in which the amount of HEAA to be used was increased to 3 to 12%, further improvement of the repelling resistance was obtained, and the adhesive force (the peeling strength) had been also improved. In Example 2 in which the amount of HEAA to be used was increased to 3 to 7% (particularly 4%), a particularly good result was obtained, and in Example 5 in which substantially the same amount of HEA was used, both of the repelling resistance and the peeling strength were remarkably improved.

Example 6

To a reaction vessel equipped with a cooling tube, a nitrogen gas inlet tube, a thermometer, a dropping funnel, and a stirrer were put 0.2 part of AIBN as a polymerization initiator, 85 parts of 2EHA as the monomer components, and ethyl acetate as a solvent, followed by stirring at room temperature under a nitrogen gas atmosphere for 1 hour. Thereafter, the contents in the reaction vessel were heated to 60°C, and polymerized in a nitrogen gas stream while adding dropwise 15 parts of HEAA prepared in a dropping funnel over 3 hours. By this continuous feed mode of solution polymerization, a solution of the acrylic polymer was obtained. 0.1 part of the crosslinking agent A based on 100 parts of the acrylic polymer was added thereto to obtain a pressure-sensitive adhesive composition according to Example 6. A pressure-sensitive adhesive sheet was prepared in the same manner as in Example 1, except that the composition was used. The gel fraction of the pressure-sensitive adhesive was 57.7%.

Example 7

A pressure-sensitive adhesive composition was prepared in the same manner as in Example 6, except that the monomer mixture of the composition shown in Table 2 were used, and that the amount of the crosslinking agent A to be used was 0.05 part, and a pressure-sensitive adhesive sheet was prepared using the composition. The gel fraction of the pressure-sensitive adhesive was 65.3%.

Example 8

A pressure-sensitive adhesive composition was prepared in the same manner as in Example 6, except that the monomer mixture of the composition shown in Table 2 (in the table, "EA" represents ethyl acrylate. The Tg of the homopolymer is -22°C.) were used, and that the crosslinking agent was not used. A pressure-sensitive adhesive sheet was prepared using the composition in the same manner as in Example 1, except that the drying was carried out at a temperature of 50°C for 7 minutes. The gel fraction of the pressure-sensitive adhesive was 0%.
The evaluation tests as described above were carried out on the pressure-sensitive adhesive sheet prepared in Examples 6 to 8. The results are shown in Table 2.

Table 2

| | Monomer mixture (part) | | | Tg (°C) | Corrosiveness | Repelling resistance (mm) | Peeling strength (N/25mm) | Holding power |
|---|---|---|---|---|---|---|---|---|
| | 2EHA | EA | HEAA | | | | | |
| Example 6 | 85 | | 15 | -55 | Absence | 10.3 | 17.8 | Good |
| Example 7 | 80 | | 20 | -50 | Absence | 19.3 | 18.4 | Good |
| Example 8 | | 60 | 40 | 15 | Absence | 47.3 | 4.3 | Bad |

As shown in Table 2, for the pressure-sensitive adhesive sheets according to Examples 6 and 7 in which HEAA was used at a copolymerization ratio of 2 to 20%, the repelling resistance and the peeling strength were remarkably improved, as compared with the pressure-sensitive adhesive sheet without the use of HEAA (Example 4). However, for the pressure-sensitive adhesive sheet according to Example 8 in which the amount of HEAA to be used was too high, sufficient adhesive performances could not be obtained. Further, all of the pressure-sensitive adhesive sheets according to Examples 6 to 8 did not have corrosiveness on a metal surface.

Example 9

A pressure-sensitive adhesive composition was prepared in the same manner as in Example 1, except that the monomer mixture of the composition shown in Table 3 (in the table, "CHMI" represents N-cyclohexylmaleimide) were used, and that the amount of the crosslinking agent A to be used was 0.1 part, and a pressure-sensitive adhesive sheet was prepared using the composition. The gel fraction of the pressure-sensitive adhesive was 56.8%.

Example 10

A pressure-sensitive adhesive composition was prepared in the same manner as in Example 1, except that the monomer mixture of the composition shown in Table 3 (in the table, "VAc" represents vinyl acetate, and that the amount of the crosslinking agent A to be used was 0.1 part, and a pressure-sensitive adhesive sheet was prepared using the composition. The gel fraction of the pressure-sensitive adhesive was 60.1 %.

Example 11

A pressure-sensitive adhesive composition was prepared in the same manner as in Example 1, except that the monomer mixture of the composition shown in Table 3 were used, and that the amount of the crosslinking agent A to be used was 0.5 part, and a pressure-sensitive adhesive sheet was prepared using the composition. The gel fraction of the pressure-sensitive adhesive was 44.5%.

The evaluation tests as described above were carried out on the pressure-sensitive adhesive sheet prepared in Examples 9 to 11. The results are shown in Table 3.

Table 3

| | Monomer mixture (part) | | | | | Corrosiveness | Repelling resistance (mm) | Peeling strength (N/25mm) | Holding power |
|---|---|---|---|---|---|---|---|---|---|
| | 2EHA | HEAA | HEA | CHMI | VAc | | | | |
| Example 9 | 92 | 4 | | 4 | | Absence | 1.0 | 16 | Good |
| Example 10 | 92 | 4 | | | 4 | Absence | 1.7 | 11.7 | Good |
| Example 11 | 96 | | 1 | 4 | | Absence | 17.6 | 22.1 | Good |

As shown from the comparison between Example 9 and Example 11 as shown in Table 3, even with the monomer composition in which CHMI (corresponding to the monomer m3), that is an example of a nitrogen-containing monomer having neither a carboxyl group nor a hydroxyl group, was used at a ratio of 5% or less, according to Example 9 in which HEA was substituted with HEAA, the repelling resistance was remarkably improved, as compared with Example 11 in which HEAA was not used. Even in Example 10 in which CHMI was changed into VAc, the same effect of improving the repelling resistance was shown. From this result, it was confirmed that for the nitrogen-containing monomer such as CHMI and the like, and the monomer m2 in the present invention, the use of these monomers (copolymerization) gives clearly different quality (kind) of the effect on the adhesive performance.

As shown above, specific examples of the present invention are described in detail, these are only for the illustrative purpose, and do not limit the scope of the claims. The technologies as described in the scope of the claims include various modifications and alterations of the specific examples as described above.

While the invention has been described in detail and with reference to specific embodiments thereof, it will be apparent to one skilled in the art that various changes and modifications can be made therein without departing from the spirit and scope thereof.

This application is based on Japanese Patent Applications (Patent Application Nos. 2008-135517) filed on May 23, 2008, the entirety of which is incorporated herein by way of reference.

All references cited herein are incorporated by reference herein in their entirety.

As described above, a pressure-sensitive adhesive sheet including a pressure-sensitive adhesive layer formed by using the pressure-sensitive adhesive composition of the present invention exhibits good adhesive performances (repelling resistance, static load characteristics, and the like) at a normal temperature, and further, it can be preferably used, for example, for affixation of an article having a metal surface, in addition to an electronic part, as a bonding material having a suppressed property of corroding a metal surface. The pressure-sensitive adhesive sheet can be preferably used for other applications in the embodiment for directly applying on a metal surface, for example, for the applications such as conveyance, protection, decoration, and the like of articles having a metal surface, making an advantage of such the characteristics. The pressure-sensitive adhesive composition of the present invention is suitable as a pressure-sensitive adhesive composition used for a pressure-sensitive adhesive sheet for attaching to a metal surface (typically for forming a pressure-sensitive adhesive layer of the pressure-sensitive adhesive sheet).

## Claims

1.  A pressure-sensitive adhesive composition used for a pressure-sensitive adhesive sheet to be directly attached to a metal surface, said composition comprising, as a base polymer, an acrylic copolymer obtained by polymerizing a monomer mixture,
    said monomer mixture comprising:

      at least one monomer (monomer m1) selected from alkyl (meth)acrylates represented by the following formula (I) in an amount of 50 to 99.9% by weight based on a total amount of the monomer mixture:

    $$CH_2=C(R^1)COOR^2 \qquad (I)$$

      wherein $R^1$ is a hydrogen atom or a methyl group, and $R^2$ is an alkyl group having 1 to 20 carbon atoms, and at least one monomer (monomer m2) selected from N-hydroxyalkyl (meth)acrylamides represented by the following formula (II) in an amount of 0.1 to 25% by weight based on the total amount of the monomer mixture:

    $$CH_2=C(R^3)CONHR^4 \qquad (II)$$

      wherein $R^3$ is a hydrogen atom or a methyl group, and $R^4$ is a hydroxyalkyl group having 2 to 4 carbon atoms; and said monomer mixture comprising substantially no carboxyl group-containing monomer.

2.  The composition according to claim 1, wherein the monomer m1 and the monomer m2 are contained in a total amount of 90% by weight or more based on the total amount of the monomer mixture.

3.  The composition according to claim 1 or 2, wherein the acrylic copolymer has a glass transition temperature (Tg) of -10°C or lower.

4.  The composition according to any one of claims 1 to 3, wherein the monomer m2 is N-(2-hydroxyethyl) (meth) acrylamide.

5.  A pressure-sensitive adhesive sheet to be attached to a metal surface, which is used by directly attaching to a metal surface, said sheet comprising a pressure-sensitive adhesive layer formed with the composition according to any one of claims 1 to 4.

*Fig. 1*

11

*Fig. 2*

12

*Fig. 3*

13

*Fig. 4*

14

2
3

*Fig. 5*

15

3
2
1

*Fig. 6*

16

2
1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007063536 A
- JP 2005325250 A
- JP 2000303045 A
- JP 2007264092 A
- JP 2003165965 A
- JP 2008135517 A